Europäisches Patentamt

European Patent Office

Office européen des brevets

(11) Publication number: **0 435 176 A1**

# EUROPEAN PATENT APPLICATION

(21) Application number: 90124966.4

(22) Date of filing: 20.12.90

(51) Int. Cl.⁵: **C02F 1/66**

(30) Priority: 26.12.89 JP 339306/89

(43) Date of publication of application:
**03.07.91 Bulletin 91/27**

(84) Designated Contracting States:
**DE FR SE**

(71) Applicant: Yajima, Takehiko
1-12, Shioda-cho, Minami-ku
Nagoya-shi, Aichi-ken(JP)

Applicant: Ichiba, Seietsu
4-101, C-gaiku, Kenei-kogadainijuhtaku, 25,
2-chome
Koga, Komaki-shi, Aichi-ken(JP)

Applicant: Wakahara, Masakazu
4117, Nodashinden, Hozumi-cho
Motosu-gun, Gifu-ken(JP)

(72) Inventor: Ichiba, Seietsu
4-101, C-gaiku, Kenei-kogadainijuhtaku, 25
2-chome, Koga Komaki-shi, Aichi-ken(JP)
Inventor: Wakahara, Masakazu
4117, Nodashinden, Hozumi-cho
Motosu-gun, Gifu-ken(JP)

(74) Representative: Bühling, Gerhard, Dipl.-Chem.
et al
Patentanwaltsbüro Tiedtke-Bühling-Kinne
Grupe-Pellmann-Grams Bavariaring 4
W-8000 München 2(DE)

(54) Neutralizing and anti-acidifying agents and their manufacture.

(57) The invention provides a neutralizing and anti-acidifying agent composed of a porous substance including silicon dioxide as a carrier and a metal oxide or oxides which act as a base in an acidic medium and are supported on silicon dioxide; in which the metal oxide and silicon dioxide form a complex salt. The safe and non-corrosive agent of the invention efficiently neutralizes acidic waste water without producing undesirable deposits and prevents acidification of waste water to maintain the waste water neutral. The invention also provides process for manufacturing the agent. It includes the steps of: wet mixing silicon dioxide with a metal oxide or oxides acting as a base in an acidic medium; leaving the mixture at ambient temperature to make it sufficiently hard; pressure crystallizing the mixture; and firing the crystallized mixture. The agent is manufactured efficiently and cheaply according to the process.

EP 0 435 176 A1

# NEUTRALIZING AND ANTI-ACIDIFYING AGENTS AND THEIR MANUFACTURE

## BACKGROUND OF THE INVENTION

The present invention relates to neutralizing and anti-acidifying agents used for neutralizing acidic waste water from municipalities or industries and preventing acidification of waste water, and also to process for manufacturing the agents.

Alkaline chemicals such as sodium hydrogencarbonate, anhydrous sodium carbonate (soda ash), sodium hydroxide, and calcium hydroxide are generally used for neutralizing acidic waste water from industries or municipalities.

In the process of neutralizing reaction with the above alkaline chemicals, salts are produced. In many cases, the salts are dissolved in waste water only to some limited extent and thereby deposit and precipitate in the water. The salt deposits inhibit the reaction and lower the neutralization efficiency of the alkaline chemicals. A further problem of the conventional method is that the alkaline chemicals used for neutralization are harmful and corrosive. Total carefulness is accordingly required for their handling.

Various attempts have also been made to prevent acidification of waste water and maintain the waste water neutral using amphoteric oxides such as aluminum oxide (alumina); but no practical methods have been provided so far since the amount of oxide required for the treatment differs according to properties and contents of the waste water.

## SUMMARY OF THE INVENTION

One objective of the invention is thus to provide safe and non-corrosive neutralizing and anti-acidifying agents.

Another objective of the invention is to provide neutralizing and anti-acidifying agents which efficiently neutralize acidic waste water without producing undesirable deposits and also prevent acidification of waste water to maintain the waste water neutral.

A further objective of the invention is to provide process for manufacturing the above neutralizing and anti-acidifying agents efficiently and cheaply.

Other objects and benefits of the invention will become apparent from the detailed description which follows hereinafter when taken in conjunction with the drawing figure which accompanies it.

The above and other related objectives are realized by a neutralizing and anti-acidifying agent composed of a porous substance including silicon dioxide as a carrier and a metal oxide or oxides which act as a base in an acidic medium and are supported on silicon dioxide and in which the metal oxide and silicon dioxide form a complex salt.

## BRIEF DESCRIPTION OF THE DRAWING

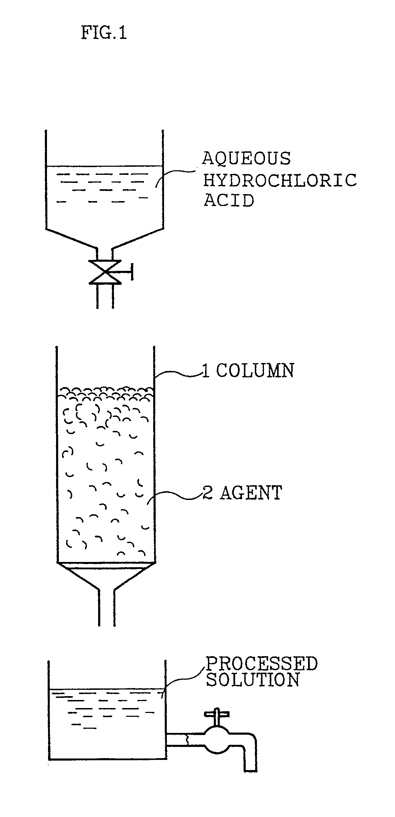

The invention may be best understood by referring to the following detailed description of an example and the accompanying drawing, in which Fig. 1 depicts a water processing process using an agent according to the present invention.

## DETAILED DESCRIPTION OF THE PREFERRED EMBODIMENT

In the present invention, a neutralizing and anti-acidifying agent is employed which is composed of a porous substance including silicon dioxide as a carrier and a metal oxide or oxides which act as a base in an acidic medium and are supported on silicon dioxide and in which the metal oxide and silicon dioxide form a complex salt.

While the metal oxide completely neutralizes an acidic solution penetrating into the porous substance, the agent does not precipitate any salt in the solution. This is because metal ions of the metal oxide are not eluted into the solution; but, are supported on the silicon dioxide carrier. The complex salt of metal oxide and silicon dioxide produced through the manufacturing process improve the strength of the porous substance, thus preventing the secondary pollution due to decomposition of the porous substance.

When the porous agent of the invention exists in the neutralized solution, the metal oxide, i.e., base, reacts with the acidic substances to maintain neutral state of the solution, even if some acidic substances are added to the solution.

The metal oxide mentioned above can comprise basic oxides such as calcium oxide (CaO), iron (III)

oxide ($Fe_2O_3$), manganese oxide (MnO), magnesium oxide (MgO), and potassium oxide ($K_2O$) and amphoteric oxides such as aluminum oxide ($Al_2O_3$). These metal oxides act as a base in an acidic medium and neutralize the medium. Iron (III) oxide, $Fe_2O_3$, is preferable since it works efficiently in highly acidic medium (pH<6).

The porous agent of the invention preferably includes calcium oxide. Calcium oxide combines with silicon dioxide ($SiO_2$) to form tobermorite (one of calcium silicates, $5CaO \cdot 6SiO_2 \cdot 5H_2O$) which improves the mechanical strength of the porous agent. Furthermore, calcium salts produced in the neutralization process are harmless, and thus the agent of the invention is applicable for processing drinking water or water for agricultural purposes. Commercially available calcium silicates may be used instead of preparing tobermorite from silicon dioxide and calcium oxide, if desired. The use of calcium silicates, of course, reduces the manufacture cost.

Although silicon dioxide used as a carrier is acidic, it is not dissolved at all in neutral or acidic mediums; but is slightly dissolved in a basic medium. Thus, silicon dioxide contributes to neutralization of basic medium.

The porous agent of the invention preferably comprises calcium oxide and at least one more metal oxide selected from aluminum oxide, iron oxide, manganese oxide, magnesium oxide, and potassium oxide. The preferred porous agent includes the metal oxide mixture in appropriate proportions so as to efficiently and effectively process waste water. Water processed according to the present invention activates bacteria in the soil and favorably affects growth of agricultural products.

The invention also provides a process for efficiently manufacturing the neutralizing and anti-acidifying agent described above. The preferred manufacture process includes the steps of: (a) wet mixing silicon dioxide with a metal oxide or oxides acting as a base in an acidic medium; (b) leaving the mixture at ambient temperature until it becomes sufficiently hard to work with; (c) pressure crystallizing the mixture; and then, (d) firing the crystallized mixture.

As stated above, the metal oxide preferably used in the process is calcium oxide; and, commercially available calcium silicates such as tricalcium silicate ($3CaO \cdot SiO_2$) and dicalcium silicate ($2CaO \cdot SiO_2$) may be used instead of preparing the mixture of silicon dioxide and calcium oxide to reduce the manufacture costs.

The manufacture process may alternatively comprises the following steps instead of the above-described step (a): mixing calcium silicate with aluminum (A1) powder and another metal oxide; adding an appropriate amount of water to the mixture; and, preparing a well-stirred slurry. Some examples an appropriate the metal oxide include calcium oxide (CaO), iron(III) oxide ($Fe_2O_3$), manganese oxide (MnO), magnesium oxide (MgO), potassium oxide ($K_2O$), and aluminum oxide ($Al_2O_3$).

A porous substance is made of oxides homogeneously mixed through a process for forming tobermorite. The process has been devised to be applied for industrial use. The following is the process for forming tobermorite.

Hydration of calcium oxide and calcium silicates proceeds at ambient temperature as shown in the following equilibria (1) through (3) to produce calcium hydroxide and colloidal crystal ($3CaO \cdot 2SiO_2 \cdot 3H_2O$), respectively. The colloidal crystal gradually becomes hard to form a water-insoluble substance. The following hydration reactions of equilibria (1) through (3) are all exothermic.

(1) $CaO + H_2O \longrightarrow Ca(OH)_2$

(2) $2(3CaO \cdot SiO_2) + 6H_2O \longrightarrow 3CaO \cdot 2SiO_2 \cdot 3H_2O + 3Ca(OH)_2$

(3) $2(2CaO \cdot SiO_2) + 4H_2O \longrightarrow 3CaO \cdot 2SiO_2 \cdot 3H_2O + Ca(OH)_2$

Powdery aluminum reacts respectively with water and with calcium hydroxide and water to form aluminum hydroxide and a complex salt of calcium oxide and aluminum oxide containing water of crystallization ($3CaO \cdot Al_2O_3 \cdot 6H_2O$) as shown in the following equilibria (4) and (5).

(4) $2Al + 6H_2O \longrightarrow 2Al(OH)_3 + 3H_2$

(5) $2Al + 3Ca(OH)_2 + 6H_2O \longrightarrow 3CaO \cdot Al_2O_3 \cdot 6H_2O + 3H_2$

In the process of the hydration reactions of equilibria (4) and (5), hydrogen gas is discharged. Discharge of hydrogen gas leaves pores in the substance to form a porous body.

After the hardening process at ordinary temperature, the porous body is pressure crystallized, for example, in an autoclave at 10 atmospheric pressure and 180°C for 24 hours. Through this crystallization process, saturated vapor cures the porous body to a sufficient hardness. Silicon dioxide ($SiO_2$) diffuses to the surface of the porous body and reacts with the complex salt crystal ($3CaO \cdot 2SiO_2 \cdot 3H_2O$) on the surface of the body to form tobermorite crystal ($5CaO \cdot 6SiO_2 \cdot 5H_2O$). The plate-like tobermorite crystal improves the strength of the porous agent.

A large block of the porous body is generally crushed into grains of appropriate size after the pressure crystallization process. In many cases, however, the crushed surface does not maintain a sufficient

3

hardness. These crushed grains of the porous body may be decomposed and precipitate in processed waste water.

A binder of low viscosity may be mixed with the crushed grains to prevent such undesirable decomposition. The binder uniformly sticks onto the surface of each crushed grain and, when being heated, effectively seals small cracks on the surface to improve the strength of the crushed grain. Crushed grains are previously classified by sizes and only those of desirable size should be used for efficiently and effectively processing water.

The binder used here may be any conventional one as long as it is easily handled. Some examples of the binder include ethylene glycol and stearic acid containing 10 to 20 % of paraffin. The binder itself does not necessarily contribute to the anti-acidification process; but, only improves the strength of the porous grains and is mostly burnt off through firing process.

The crushed grains with binder are fired at a temperature not higher than 650 $^\circ$ C in a firing furnace. The preferable temperature rise rate is not greater than 50 $^\circ$ C/ hour. Especially, in a temperature range for drying the porous grains, i.e., between 100 and 200 $^\circ$ C, a rate not greater than 30 $^\circ$ C/ hour is preferable. When temperature is raised too fast, cracks are generated on the surface of the crushed grains.

When the crushed piece is heated, a temperature gradient from the surface to the core of the crushed piece is observed. The temperature gradient causes mass transfer; molecules or atoms of the metal oxide transfer in a direction to increase the density on the surface of the crushed piece so as to heal the cracks. When the temperature is not greater than 650 $^\circ$ C, the moderate mass transfer occurs. On the other hand, when the temperature is greater than 650 $^\circ$ C, the crystal structure is changed and the strength of the crystal is drastically reduced. This drastic change may cause decomposition of the crushed grains.

Although binder is mostly burnt off through firing process, part of the binder transfers through crushed grains and pores to cover and heal the crack on the surface of the crushed grains.

While only several percent of the mass transfers in a temperature range between the ambient temperature and 200 $^\circ$ C, 20 to 30 % mass transfer occurs in a range between 200 and 600 $^\circ$ C.

A preferred neutralizing and anti-acidifying agent according to the present invention (density: 0.4 to 0.7 g/cm$^3$; porosity: 70 to 80 %; compressive strength: 40 to 45 kgf/cm$^2$) is obtained in the above manner. Table 1 shows the constituent of the agent and its proportion.

## Table 1

| CONSTITUENT | PROPORTION (% BY WEIGHT) |
|---|---|
| $SiO_2$ | 50.0 TO 60.0 |
| CaO | 25.5 TO 28.0 |
| $Al_2O_3$ | 2.5 TO 3.0 |
| $Fe_2O_3$ | 2.0 TO 2.5 |
| MnO | 0.8 TO 1.0 |
| MgO | 1.5 TO 1.8 |
| $K_2O$ | 0.8 TO 1.0 |
| $H_2O$ | 14.0 TO 15.0 |

Detailed Description of Experiments

Preparation of a neutralizing and anti-acidifying agent according to the invention will now be explained in detail. (Preparation of the agent)

Powdery materials were mixed according to the proportion of Table 2. Water was then added little by little to the mixture. The mixture was well stirred to make slurry.

## Table 2

| CONSTITUENT | PROPORTION (PARTS BY WEIGHT) |
|---|---|
| $3CaO \cdot SiO_2$ | 20.0 |
| $2CaO \cdot SiO_2$ | 20.0 |
| CaO (ADDITIONAL) | 1.0 |
| $Fe_2O_3$ | 1.0 |
| MnO | 0.4 |
| MgO | 0.8 |
| $K_2O$ | 0.4 |
| $Al_2O_3$ | 0.5 |
| Al | 2.0 |
| $H_2O$ | 55.0 |

After sitting at ambient temperature for 24 hours (the hardening process), the slurry was heated in an autoclave at 10 atmospheric pressure and 180°C for 24 hours (the curing process with saturated vapor). A block of porous agent was obtained thereby.

The block was crushed into small grains, which were then classified by sizes. Crushed grains of 2 to 3 mm diameter were favorably used. 70 parts by weight crushed grains, 10 parts by weight ethylene glycol, 20 parts by weight water were mixed and well stirred. The mixture was then fired in a firing furnace. The temperature in the furnace was raised at 30°C/hour from the ambient temperature to 200°C and then at 50°C/hour from 200 to 600 °C. After being fired at 600°C for six hours, the mixture was cooled. Grains of a neutralizing and anti-acidifying agent according to the present invention were thus obtained.

The mechanical properties of the agent were as follows: density: 0.48 $g/cm^3$; porosity: 70%; and, compressive strength: 45 $kgf/cm^2$.

Some experiments were conducted to estimate the neutralizing ability of the agent of the example.

Experiment 1

500cc of aqueous hydrochloric acid (pH 3.5) was prepared by adding tap water to hydrochloric acid (HCl). 5g of the agent was added to the acidic solution and allowed to stand at ambient temperature for 10 hours. The pH of the solution dropped to 7.0 after 10 hour period. A small amount of aqueous hydrochloric acid was then added to the neutralized solution without stirring at certain time intervals. The solution gradually became acidic again and salts started precipitating. The start of precipitation indicated the limit of the neutralizing ability of the agent. The neutralizing ability of the agent was calculated based on the results of the experiment. It was found that each gram of the agent can neutralize an acidic medium of $5 \times 10^{-3}$ mol/l hydrogen ion concentration.

Experiment 2

A column 1 was filled with 200g of the agent 2 (filling length: 150mm) as depicted in Fig. 1. Aqueous hydrochloric acid (pH 5.5) was dropped at one end of the column 1. The solution passing through the agent 2 in the column 1 was collected. The solution passed through the column 1 in approximately 20 seconds. The collected solution was completely neutralized and showed pH 7.0. No precipitate or dispersion of salts was observed in the collected solution.

Thus, the agent is suitable for continuously processing large quantity of acidic waste water. For example, 1 ton of the agent is sufficient for processing 500 t of acidic waste water (pH 5.5) a day (8 hours), i.e., approximately 1 ton a minute, when waste water passes through a process tank at a rate of 10 ml/min (in this case, waste water passes through the agent in approximately 25 seconds). The agent is durable for more than 2 months under the above conditions. The durability is calculated on an estimation that each gram of the agent can process $5 \times 10^{-3}$ mol/l hydrogen ion concentration.

Experiment 3

Aqueous hydrochloric acid (pH 2.4) was neutralized to pH 7.0 with the agent. The neutralizing ability of the agent was measured as Experiment 1. The agent before use and after use was analyzed by ICP emission spectrometry to determine the content (% by weight) of primary metal elements. Table 3 shows the results.

## Table 3

| ELEMENT | BEFORE USE (% BY WEIGHT) | AFTER USE (% BY WEIGHT) |
|---------|--------------------------|-------------------------|
| Fe | 1.40 | 1.26 |
| Ca | 22.2 | 13.7 |
| K | 0.42 | 0.31 |
| Mg | 0.63 | 0.53 |

As clearly seen in Table 3, the metal elements, which act as counter cation to produce salts, decrease only a little after use of the agent. This means that the metal ions are not eluted in solution and thus the agent of the example does not precipitate salts in solution. Experiment 4

The agent was added to an acidic solution to neutralize it, and then left in the neutralized solution for approximately one month. The variation in pH was measured periodically during the month. pH varied in a range of 7.0 + 0.5; that is, the solution was virtually maintained neutral.

The agent of the example has the following features and advantages.

(1) The agent has stable and high neutralizing ability.

(2) The agent is light in weight, strong, and is easily handled, and does not cause any secondary pollution.

(3) The agent does not precipitate salts.

(4) The agent is manufactured cheaply and may be used many times.

As described above, the neutralizing and anti-acidifying agent of the invention is safe and easily handled, efficiently neutralizes acidic medium without producing undesirable deposits, and prevents acidification of neutral medium. It is also cheaply and efficiently manufactured according to the process described.

The invention provides a neutralizing and anti-acidifying agent composed of a porous substance including silicon dioxide as a carrier and a metal oxide or oxides which act as a base in an acidic medium and are supported on silicon dioxide; in which the metal oxide and silicon dioxide form a complex salt. The safe and non-corrosive agent of the invention efficiently neutralizes acidic waste water without producing undesirable deposits and prevents acidification of waste water to maintain the waste water neutral. The invention also provides process for manufacturing the agent. It includes the steps of: wet mixing silicon dioxide with a metal oxide or oxides acting as a base in an acidic medium; leaving the mixture at ambient temperature to make it sufficiently hard; pressure crystallizing the mixture; and firing the crystallized mixture. The agent is manufactured efficiently and cheaply according to the process.

## Claims

1. A neutralizing and anti-acidifying agent in the form of a porous substance comprising:
   a) silicon dioxide acting as a carrier; and,
   b) a metal oxide which acts as base in an acidic medium are supported on said silicon dioxide; in which,
   c) said metal oxide and said silicon dioxide combine to form a complex salt.

2. A neutralizing and anti-acidifying agent as claimed in claim 1 wherein:
   said metal oxide is selected from a group consisting of basic oxides including calcium oxide, iron oxide, manganese oxide, magnesium oxide, and potassium oxide, and amphoteric oxides including aluminum oxide.

3. A neutralizing and anti-acidifying agent as claimed in claim 1, wherein:
   a) said metal oxide is calcium oxide; and,
   b) said complex salt is tobermorite composed of silicon dioxide and calcium oxide.

4. A neutralizing and anti-acidifying agent as claimed in claim 1, wherein:
   said metal oxide comprises calcium oxide and at least one other oxide selected from the group consisting of aluminum oxide, iron oxide, manganese oxide, magnesium oxide, and potassium oxide.

5. A neutralizing and anti-acidifying agent as claimed in claim 1 and further comprising aluminum powder.

6. A neutralizing and anti-acidifying agent as claimed in claim 1, wherein said metal oxide is iron (III) oxide.

7. A manufacturing process for manufacturing a neutralizing and anti-acidifying agent comprising the steps of:
   a) wet mixing silicon dioxide with a metal oxide which acts as base in an acidic medium;
   b) leaving the mixture at ambient temperature for a period sufficient for it to dry to a hardness sufficient for working;
   c) pressure crystallizing the mixture; and,
   d) firing the crystallized mixture.

8. The manufacturing process as claimed in claim 7 and additionally including the step of:
   first selecting the metal oxide from a group consisting of calcium oxide, iron oxide, manganese oxide, magnesium oxide, potassium oxide, and aluminum oxide.

9. The manufacturing process as claimed in claim 7 wherein the steps thereof include the step of hardening the mixture of the metal oxide and silicon dioxide by hydration at ambient temperatures.

10. The manufacturing process as claimed in claim 7 wherein said step of firing the crystallized mixture comprises firing the mixture at a temperature not greater than 650°C.

11. The manufacturing process as claimed in claim 7 wherein said step of firing the crystallized mixture comprises:
    a) firing the mixture in a firing furnace;
    b) raising the temperature in the furnace at a rate of not greater than 30°C/hour to 200°C; and
    c) raising the temperature in the furnace at a rate of not greater than 50°C/hour to an ultimate firing temperature.

12. The manufacturing process as claimed in claim 7 wherein the steps thereof include the step of pressure crystallizing the mixture at 10 atmospheric pressures and 180°C for 24 hours.

13. The manufacturing process as claimed in claim 7 and further comprising the steps of:
    a) crushing a fired block into small grains; and,
    b) classifying the grains by sizes to select those of appropriate size.

14. The manufacturing process as claimed in claim 16 wherein the steps thereof include the step of mixing a binder with the small grains.

15. The manufacturing process as claimed in claim 18 wherein the steps thereof include the step of selecting the binder from the group consisting of ethylene glycol and paraffin-containing stearic acid.

16. A process for manufacturing a neutralizing and anti-acidifying agent comprising the steps of:
    a) mixing calcium silicate with aluminum powder and a metal oxide to form a mixture;
    b) adding an appropriate amount of water to the mixture and mixing so as to form a well stirred slurry;
    c) allowing the slurry to stand at ambient temperature until sufficiently hard enough to be pressure crystallized;
    d) pressure crystallizing the hardened slurry mixture; and,

e) firing the crystallized mixture.

FIG.1

AQUEOUS
HYDROCHLORIC
ACID

1 COLUMN

2 AGENT

PROCESSED
SOLUTION

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 615 755 (RHEINISCH-WESTFALISCHE KALK-WERKE A.G.) <br> * page 11 * claims 1,4,5,13,15,17,19 * * page 8, line 21 - page 9, line 5 * | 1-3,5,7,9, 12,13,16 | C 02 F 1/66 |
| X | Derwent Publications Ltd. London GB; Database WPIL, Acc.No.88-267495 (Derw.week 8838) <br> & JP63-194729 (ASAHI CHEMICAL IND.) <br> * Abstract * | 1,3,5,7, 12,13, | |
| A | Derwent Publications Ltd. London GB; Database WPIL, Acc.No.80-57693C (Derw.week 8033) <br> & JP55-86583 (OGAWA I.) <br> * Abstract * | 1,15 | |

TECHNICAL FIELDS SEARCHED (Int. Cl.5)

C 02 F
B 01 J

The present search report has been drawn up for all claims

| Place of search | Date of completion of search | Examiner |
|---|---|---|
| The Hague | 18 March '91 | TEPLY J. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

 

& : member of the same patent family, corresponding document